**Europäisches Patentamt**

**European Patent Office**

**Office européen des brevets**

(11) Publication number : **0 481 771 A2**

# (12) EUROPEAN PATENT APPLICATION

(21) Application number : **91309558.4**

(51) Int. Cl.⁵ : **G06F 15/02**, G06F 3/06

(22) Date of filing : **17.10.91**

(30) Priority : **18.10.90 JP 281524/90**
**23.08.91 JP 238633/91**

(43) Date of publication of application :
**22.04.92 Bulletin 92/17**

(84) Designated Contracting States :
**DE ES FR GB IT**

(71) Applicant : **NIPPON STEEL CORPORATION**
**6-3 Otemachi 2-chome Chiyoda-ku**
**Tokyo 100 (JP)**

(72) Inventor : **Nakai, Toshio**
**6-3, Otemachi 2-chome**
**Chiyoda-ku, Tokyo (JP)**
Inventor : **Nagata, Syouichi**
**6-3, Otemachi 2-chome**
**Chiyoda-ku, Tokyo (JP)**

(74) Representative : **Geering, Keith Edwin**
**REDDIE & GROSE 16 Theobalds Road**
**London WC1X 8PL (GB)**

(54) **Portable electronic unit.**

(57)   A portable personal computer includes a single slot (53) in which a hard disc drive (32) and an IC card (12) can be commonly mounted, and an attachment and detachment case (10) in which the IC card is accommodated. The attachment and detachment case (10) has substantially the same configuration as that of the hard disc drive (32), and thus the attachment and detachment case (10) in which the IC card (12) is accommodated can be inserted in the slot (53).

Fig. 1

EP 0 481 771 A2

Fig. 5

## BACKGROUND OF THE INVENTION

### 1. Field of the Invention

The present invention relates to portable electronic units; more precisely, it relates to a portable personal computer, such as a book type computer or a note book type computer, in which a hard disc drive can be incorporated.

### 2. Description of the Related Art

The rapid progress in the miniaturization of personal computers has led to the production of personal computers which are easily portable, such as the note book type computer or book type computer now available on the market. This miniaturization of the size of personal computers, however, has led to a problem in that a hard disc drive to be incorporated therein also must be made as small as possible.

An IC card having semiconductor memory chips incorporated therein has been developed as an external storage means for such portable personal computers, and although the IC card has a smaller memory capacity than that of a hard disc drive, it has advantages such as a quick access and a smaller size and lighter weight than the hard disc drive.

In a conventional portable personal computer, separate slots are provided in which the hard disc drive and the IC card are separately inserted, and thus both the hard disc drive and the IC card can be mounted at the same time. Nevertheless, as both the hard disc drive and the IC card are both used mainly as an external storage means, even if are mounted in the personal computer at the same time, they are seldom used at the same time. Also, the separate mounting of the hard disc drive and the IC card requires the allocation of a large space, and accordingly, this becomes a bar to the realization of a very small portable personal computer.

The primary object of the present invention is to provide a portable electronic unit, such as a portable personal computer, having an increased space utilization efficiency and an improved portability.

## SUMMARY OF THE INVENTION

To achieve the above object, according to an aspect of the present invention, there is provided a portable electronic unit which comprises a single slot in which a hard disc drive and an IC card can be commonly mounted.

Preferably, the IC card is accommodated in an attachment and detachment case having a configuration which is the same as that of the hard disc drive, whereby the attachment and detachment case in which the IC card is accommodated can be easily inserted in the slot.

With this arrangement, the IC card received in the attachment and detachment case can be mounted in the slot in which the hard disc drive is to be mounted, through a first connector, and accordingly, this space, i.e., the slot for mounting the hard disc drive, can be commonly used also for the IC card, thus resulting in an increased space utilization efficiency.

Furthermore, a second connector is preferably provided in the attachment and detachment case in which the IC card is received, and the above first connector and this second connector are interconnected by a converting board which, in a preferred embodiment, is a flexible printed wiring board.

The hard disc drive referred to herein means a hard disc drive having or not having a protective case. Namely, the hard disc drive is often accommodated in a protective case, and the case having the hard disc drive therein is inserted in the slot of the personal computer. The present invention can be applied also in such a case.

Furthermore, since the first connector and the second connector are interconnected by the converting board, it is possible to connect IC cards having different connector structures to the first connector of the protective case. This also ensures an easy and positive connection between the connectors.

If the converting board is made of a flexible printed wiring board, which can be easily bent in any direction and is light, the attachment and detachment case as a whole can be made small and light.

If the hard disc drive is accommodated in a protective case, for example, to reinforce or protect the same, the configuration of the attachment and detachment case for the IC card is made substantially identical to that of the protective case, rather than that of the hard disc drive per se.

Furthermore, the incorporation of the memory chips in the IC card expands the memory capacity thereof. Similarly, the incorporation of a math-coprocessor and a parallel operation CPU make it possible to increase the operability of the personal computer and the operation speed thereof.

Features of the invention are illustrated by the following description with reference to the accompanying drawings, in which:

Figure 1 is a schematic perspective view of an IC card mounted in an attachment and detachment case, according to the present invention;

Figure 2 is a schematic sectional view of an attachment and the detachment case shown in Fig. 1 immediately before the mounting in (or immediately after the dismounting from) a portable computer body;

Figire 3 is a schematic plan view of an IC card attached to the attachment and detachment case;

Figure 4A is a schematic plan view of a connector arrangement for the use of an IC card, by way of example;

Figure 4B is an enlarged side elevational view of a part of Fig. 4A;
Figure 5 is a schematic perspective view of a hard disc device accommodated in a protective case;
Figure 6 is a schematic sectional view of a protective case shown in Fig. 5 immediately before the mounting in (or immediately after the dismounting from) a computer body; and,
Figure 7 is a schematic plan view of a hard disc drive attached to a protective case shown in Figs. 5 and 6.

## DESCRIPTION OF THE PREFERRED EMBODIMENTS

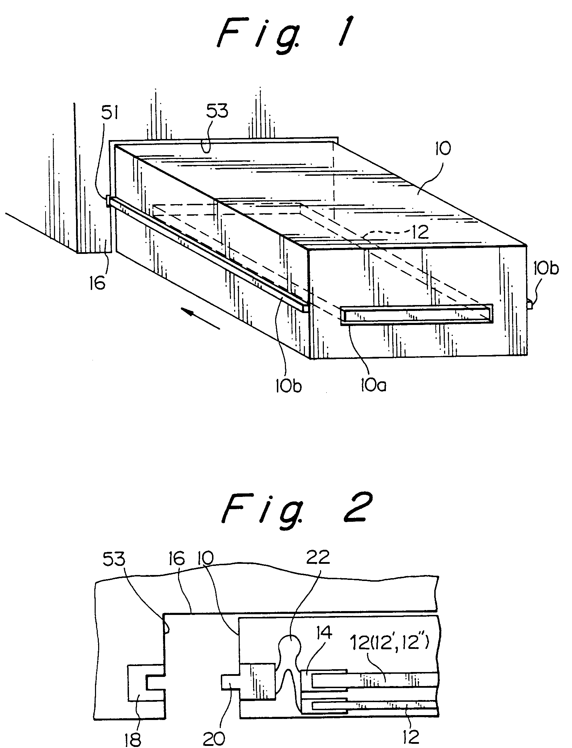

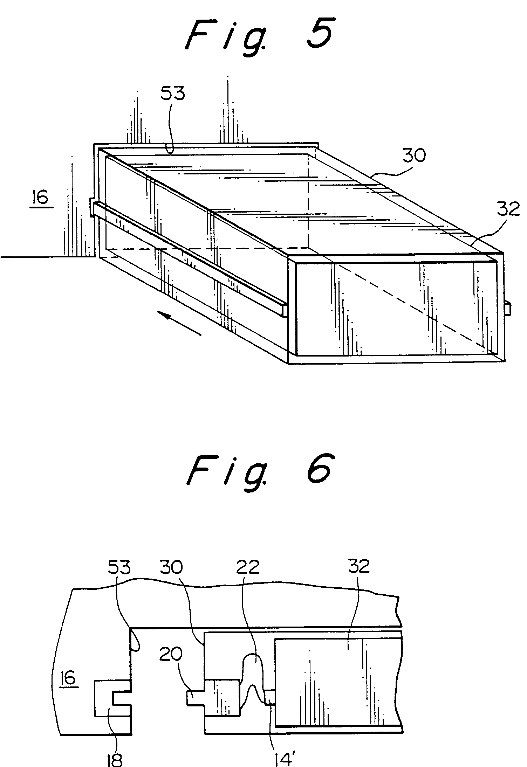

As shown in Fig. 1, an attachment and detachment case 10 is constructed such that an IC card 12 can be inserted to or withdrawn from a guide opening 10a of the case 10. The side walls of the case 10 are provided with parallel guide projections 10b, which fit in corresponding parallel guide grooves 51 formed in a body 16 of a personal computer when the case 10 is fitted in an existing slot 53 of the computer body 16 for accommodating therein a hard disc drive 32 (Fig. 5). Although only one IC card 12 is shown in Fig. 1, it is possible to mount two or more IC cards 12 in the attachment and detachment case 10, as the IC card 12 is very thin compared to the hard disc drive, as can be seen in Fig. 2. In the illustrated embodiment, the IC card 12 is a memory card.

As can be seen in Fig. 2, a first connector 20 is provided on the front end of the attachment and detachment case 10. The first connector 20 is the same as that used by the hard disc drive 32 (referred to as HDD 32 hereinafter), and thus the connector 20 can be connected to a third connector 18 provided in the slot 53 of the computer body 16 for the HDD 32.

The attachment and detachment case 10 has substantially the same configuration as that of the HDD 32 to be inserted in the slot 53. Namely, the IC card 12, when accommodated in the attachment and detachment case 10, has a configuration equivalent to that of the HDD 32, so that the IC card 12 accommodated in the attachment and detachment case 10 can be mounted in the slot 53 of the computer body 16.

A second connector (connectors) 14 is (are) provided in the attachment and detachment case 10 for use by only the IC card(s) 12. Each of the connectors 14 is identical to a predetermined connector provided in an existing slot for the IC card 12 in a personal computer fitted with such a slot for specifically receiving the IC card 12. Recent HDD's are very small, and a disc having a diameter of about 2.5 inches is now available on the market. Generally speaking, however, the IC card is even smaller, and accordingly, an attachment and detachment case 10 for the IC card having a configuration substantially the same as that of the HDD can be realized.

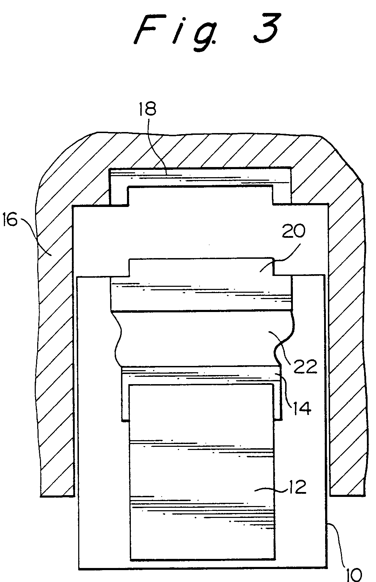

As can be seen in Figs. 2 and 3, the second connectors 14 for the IC card 12 and the third connector 18 provided in the common slot 53 of the computer body 16 are electrically connected to each other by a converting board 22. The board is referred to as a converting board herein because it can cope with a variety of arrangements of contact pins of the IC card 12 and the connector 20, i.e., can absorb any differences in the arrangement of the contact pins of the IC card 12 and that of the connector 20. The converting board 22 is made of a flexible printed wiring board which can be easily deformed or bent and which has a printed wiring circuit on the surface thereof. This reduces the weight of the attachment and detachment case 10 as a whole. Note, although the printed wiring circuit on the converting board 22 is simple, it is able to connect the corresponding pins of the connector 14 and the connector 20 because, in the case of an HDD mounted in a personal computer, the circuits of a controller system thereof are all built-in to the HDD per se, and thus the access to the personal computer is simplified.

Accordingly, the slot 53 for the HDD 32 can be used as a slot for the IC card 12, and therefore, it is not necessary to provide separate slots for the HDD 32 and the IC card 12, as used in the prior art. Furthermore, the memory capacity of the IC card 12 has been recently remarkably increased, and thus the IC card 12 can be used in the same way as the HDD 32 as long as the IC card 12 is in a normal use. Accordingly, if the IC card 12 is used in place of the HDD 32, not only is the weight of the personal computer as a whole reduced, but also short access time is realized, and thus the usability of the personal computer is improved. The IC card 12 is usually constituted by some RAM chips, and therefore, when disconnected from the connector 14 the data stored therein is lost. In this case, the stored data can be held for a predetermined period by incorporating a small battery in the IC card 12.

The above description concerns the IC card 12 having memory chips incorporated therein, but other semiconductor devices, such as a math-coprocessor, can be incorporated in the IC card 12, and therefore, an IC card 12' (Fig. 2) having a math-coprocessor therein can be mounted in the slot for the HDD 32 through the attachment and detachment case 10. Note that the referred-to math-coprocessor performs only numeral calculations or image processing, or the like.

In a usual personal computer, when the math-coprocessor is added, to increase the variety of the functions thereof, a board for the math-coprocessor is often inserted in a mother board provided in the personal computer body, through a socket. In this case, it is necessary to provide an additional space for accommodating the processor board in the computer body, and this is a bar to a realization of a small and light computer. Nevertheless, it is possible to connect the math-coprocessor to the computer body without providing such a special space therein, by mounting the IC card 12 having the math-coprocessor incorporated therein into the slot for the HDD 32, as in the above-mentioned embodiment of the present invention, and thus the personal computer can be made small and light and have an improved operability.

Alternatively, it is possible to use an IC card 12″ (Fig. 2) having therein a central processing unit (CPU) for parallel operation. If such an IC card 12″ having a CPU is mounted in the personal computer through the slot for the HDD 32, the necessary tasks can be shared by the existing CPU provided in the personal computer and the CPU in the IC card 12″, and as a result, the operation speed of the personal computer, which has been restricted by the single CPU, can be greatly increased.

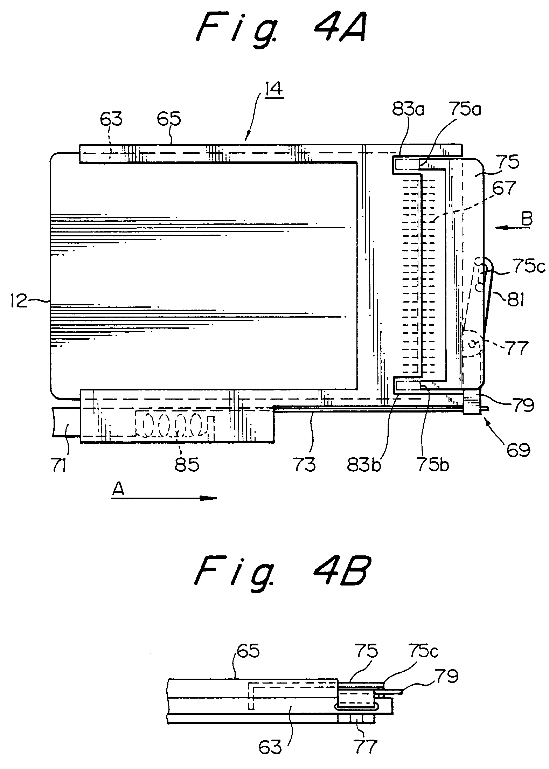

Figures 4A and 4B show details of the arrangement of a connector between the IC card 12 and the second connector 14, by way of example.

In Figs. 4A and 4B, the connector 14 has a body frame 65 having a guide grooves 63 in which the IC card 12 is inserted, a plurality of contact pins 67 provided at the rear end of the body frame 65, and an ejector,69 which ejects the IC card 12 inserted in the contact pins 67 at the front end thereof, to separate same from the connector 14.

The ejector 69 includes a push button 71, an ejection bar 73 connected to the push button 71, a slide plate 75 having engaging pawls 75a and 75b which engage with the rear end of the IC card 12, and operational arms 79 and 81 which are rotatable about a pivot shaft 77 provided on the body frame 65.

The body frame 65 has recesses 83a and 83b on opposite sides of the pins 67, and the engaging pawls 75a and 75b of the slide plate 75 can be inserted in the recesses 83a and 83b, respectively. The operational arms 79 and 81 are formed integrally therewith. The operational arm 79 is connected at the other end thereof to the ejection bar 73 and the operational arm 81 is engaged at the other end thereof with a bent portion 75c formed at the center of the end edge of the slide plate 75. The push button 71 is biased to the left in Fig. 4A by a spring 85 when an IC card 12 is not inserted in the body frame 65.

When the IC card 12 is inserted in the body frame 65 along the guide grooves 63, and connected to the pins 67, the IC card 12 is mounted in the connector 14, as shown in Fig. 4A. In this state, the engaging pawls 75a and 75b of the slide plate 75 abut against the rear end of the IC card 12.

To eject the IC card 12 from the connector 14, the push button 71 is pressed in the direction A in Fig. 4A, and as a result, the ejection bar 73 is moved in the same direction A so that the operational arm 79 connected to the ejection bar 73 is rotated about the pivot shaft 77 in the counterclockwise direction. Consequently, the operational arm 81 is also rotated about the pivot shaft 77 in the same direction, and thus the slide plate 75 is moved in the direction B in Fig. 4A. The slide plate 75 then pushes the IC card 12 in the direction B, through the engaging pawls 75a and 75b, and as the stroke of the slide plate 75 is longer than the length of the pins 67, when the engaging pawls 75a and 75b reach the ends of the recesses 83a and 83b, the IC card 12 is disconnected from the pins 67. Thereafter, the IC card 12 is manually moved further to the left by an operator, and thus the IC card 12 is completely detached from the connector 14.

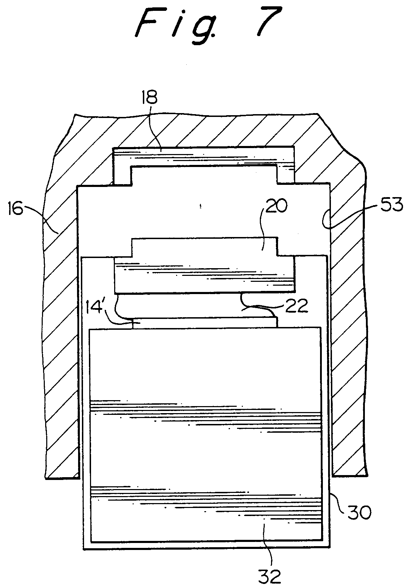

The following description is directed to a protective case 30 for the HDD 32, with reference to Figs. 5 through 7. As mentioned above, the HDD 32 is directly mounted in the slot 53 of the computer body 16, and in such a case, the attachment and detachment case 10 of the IC card 12 (12′ or 12″) has a configuration substantially identical to that of the HDD 32. When the HDD 32 is detachably accommodated in the protective case 30, however, the protective case 30 has substantially the same configuration as that of the attachment and detachment case 10 for the IC card 12 (12′ or 12″), and accordingly, the attachment and detachment case 10 and the protective case 30 can be inserted in the same slot 53. The connector 14′ of the HDD 32 is connected to the connector 20 of the protective case 30 by the converting board 22. This converting board 22 is substantially identical to the converting board 22 shown in Fig. 2. The connector 20 of the protective case 30 and the connector 14′ of the HDD 32 correspond to the connector 20 of the attachment and detachment case 10 and the connector 14 of the IC card 12, respectively, and therefore, when the protective case 30 is mounted in the slot 53 of the computer body 16, the connector 20 is connected to the connector 18. The HDD is accommodated in the protection case 30 as in the present embodiment for the following reason. Since the HDD's available on the market, which can be detachably mounted in the personal computer, are not constructed on the assumption that they will be frequently and repeatedly dismounted from the personal computer, the connector 14′ of the HDD does not have a high mechanical strength. Nevertheless, since the HDD will be repeatedly mounted and dismounted when the HDD and the IC card are mounted in the common slot, then as shown by the embodiment of Figs. 5, 6, 7, the protective case for the HDD is used to reinforce the strength of the connector for the HDD. Accordingly, the connector 20 of the protective case 30 and the connector 18 of the personal computer are designed to have a relatively high mechanical strength.

As can be understood from the foregoing, according to the present invention, since the slot in which the hard disc drive and the slot the IC card are inserted can be commonly used, the space utilization efficiency is increased and a small portable personal computer having an improved portability can be provided.

**Claims**

1. A portable electronic unit comprising a single slot (53) in which a hard disc drive (32) and an IC card (12) can be commonly mounted.

2. A portable electronic unit according to claim 1, further comprising an attachment and detachment case (10) in which the IC card (12) is accommodated, said attachment and detachment case (10) having a configuration which is substantially the same as that of the hard disc drive (32), whereby the attachment and detachment case (10) in which the IC card (12) is accommodated can be inserted in the slot (53).

3. A portable electronic unit according to claim 2, wherein said slot (53) has a connector (18) and wherein said attachment and detachment case (10) has a first connector (20) which can be connected to the connector (18) of the slot (53) when the attachment and detachment case (10) is mounted in the slot (53).

4. A portable electronic unit according to claim 3, wherein said attachment and detachment case (10) has at least one second connector (14) in which the IC card (12) can be fitted.

5. A portable electronic unit according to claim 4, wherein said attachment and detachment case (10) has a converting board (22) for connecting the first (18) and second (14) connectors.

6. A portable electronic unit according to claim 5, wherein said converting board (22) is a flexible printed wiring board.

7. A portable electronic unit according to claim 2, further comprising an ejection mechanism (63, 65, etc.) for ejecting the IC card (12) from the second connector (14) of the attachment and detachment case (10).

8. A portable electronic unit according to claim 2, further comprising a protective case (30) in which the hard disc drive (32) is accommodated.

9. A portable electronic unit according to claim 8, wherein said protective case (30) has a configuration which is the same as that of the attachment and detachment case (10) of the IC card (12).

10. A portable electronic unit according to claim 9, wherein said slot (53) has a connector (18) and wherein said protective case (30) has a first connector (20) which can be connected to the connector (18) of the slot (53) when the protective case (30) is mounted in the slot (53).

11. A portable electronic unit according to claim 10, wherein said protective case (30) has a second connector (14') which is connected to the first connector (20).

12. A portable electronic unit according to claim 11, wherein said protective case (30) has a converting board (22) for connecting the first (20) and second (14') connectors.

13. A portable computer comprising a single slot (53) with a connector (18), in which a hard disc drive (32) and an IC card (12) can be commonly mounted, and an attachment and detachment case (10) in which the IC card (12) is accommodated, said attachment and detachment case (10) having a configuration which is substantially the same as that of the hard disc drive (32), so that the attachment and detachment case (10) in which the IC card (12) is accommodated can be inserted in the slot (53), said attachment and detachment case (10) being provided with a first connector (20) which can be connected to the connector (18) of the slot (53) when the attachment and detachment case 910) is mounted in the slot (53).

# Fig. 1

# Fig. 2

# Fig. 3

# Fig. 4A

# Fig. 4B

# Fig. 5

53

30

16

32

# Fig. 6

53  30  22  32

16  20

18  14'

# Fig. 7